# EUROPEAN PATENT APPLICATION

(11) **EP 1 921 824 A1**
(43) Date of publication of application: **14.05.2008**
(21) Application number: 06301145.6
(22) Date of filing: 10.11.2006
(51) Int. Cl.: H04L 29/08

(54) **System and method for sending content from a server to a terminal**

(71) Applicant: Thomson Licensing, 92100 Boulogne-Billancourt (FR)
(72) Inventor: Boudani, Ali, 35000, RENNES (FR); Straub, Gilles, 35690, Acigné (FR); Burklin, Helmut, RENNES (FR)
(74) Representative: Ruellan-Lemonnier, Brigitte

(57) **Abstract**

The present invention concerns a system and a method for sending content from a server (2) to a terminal (6), the server comprising multicast means (22) for sending content in broadcast to a terminal through a first network, unicast means (23) for sending content in unicast to the terminal through a second network. The method comprises at the server the steps of identifying (S5) a network type (5) that permits the terminal to connect to the second network and/or the quality level of the reception of the terminal on the first network, and selecting (S6, S'6) among unicast and multicast means for sending data to the terminal, the selection depending on the network type and/or the quality level.

## Description

The present invention relates to a system and method for sending content from a server to a terminal.

Document (a), ETSI TS 102 472 V1.1.1 (2006-06), Digital Video Broadcasting (DVB); IP Datacast over DVB-H: Content Delivery Protocols, deals with IP Datacast over DVB-H. It is an end-to-end broadcast system for delivery of any types of digital content and services using IP-based mechanisms. It is optimized for devices with limitations on computational resources and battery. It comprises a unidirectional DVB broadcast path that may be combined with a bi-directional mobile/cellular interactivity path. DVB-H is a transmission system targeted to provide IP-based services to handheld terminals over terrestrial radio channels.

Document (a) introduces the file repair procedure that is intended to repair lost or corrupted file fragments. In such a procedure, a terminal requests the missing file fragments to a repair server through the mobile/cellular path. The repair server then transmits the missing file fragments to the terminal either through the mobile/cellular path, in unicast or point-to-point, or through the content delivery path, in multicast or point-to-multipoint.

The selection between unicast and multicast is based on an efficiency metric that takes into account the cost for the transmission of a single octet over the point-to-point network and the point-to-multipoint network.

The point-to-point network may be of various types, either cellular or mobile. The cost for the transmission upon such networks may then vary. For example, the data rate on a Global System for Mobile Communications network, noted GSM network, is quite lower than the data rate on an Enhanced Data rates for GSM Evolution network, noted Edge network. Defining a same cost for such a variety of networks is therefore inaccurate, and may lead to a wrong estimation of the real transmission cost. This may then provide an incorrect selection of the repair mechanism for file delivery service. This selection fits to the needs of the server but does not take into account the needs and the capacity of the terminal.

The present invention concerns a system and a method for selecting among networks for sending data to a terminal.

To this end the invention relates to a network terminal (6) comprising a first interface (12) to a first network adapted to receive content from a server (1, 2), at least a second interface (13) to at least a second network adapted to connect the terminal to the server (2), means (17) for sending a request through the at least second interface to the server for receiving a content from the server, the content being received either through the first or the at least second interface, and means (18) for indicating in the request the at least second network type (5) to which the at least second interface is connected and/or the quality level of the reception on the first interface.

In a request it sends to a server for receiving a file, the terminal indicates the network type to which it is connected to send the request and/or the quality level of the reception. By default, this information is not available to the server. This allows the server to better select the network over which it sends the requested file to the terminal.

Another object of the invention is a server (2) comprising multicast means (22) for sending content in broadcast to a terminal through a first network, unicast means (23) for sending content in unicast to the terminal through a second network, and for receiving a request from the terminal, means (25) for identifying a network type (5) that permits the terminal to connect to the second network and/or the quality level of the reception of the terminal on the first network, and means (26) for selecting among the interfaces to send a file to the terminal, the selection depending on the network type and/or the quality level.

In order to select the better path to send content to a terminal, the server takes into account the network type and/or the quality level. This permits the server to perform a better selection. This selection is then more convenient as regards to the terminal.

According to an embodiment, the means for identifying identifies the network type and/or the quality level in a request received from the terminal for receiving the file.

Another object of the invention is a method for sending content from a server (2) to a terminal (6), the server comprising multicast means (22) for sending content in broadcast to a terminal through a first network, unicast means (23) for sending content in unicast to the terminal through a second network. The method comprises at the server the steps of identifying (S5) a network type (5) that permits the terminal to connect to the second network and/or the quality level of the reception of the terminal on the first network, and selecting (S6, S'6) among unicast and multicast means for sending data to the terminal, the selection depending on the network type and/or the quality level.

Another object of the invention is a method for requesting a corrupted file to a repair server (2), in a terminal comprising a first interface (12) to a first network adapted to receive content from a server (1, 2), and at least a second interface (13) to at least a second network adapted to connect the terminal to the server (2). The method comprises at the terminal the steps of receiving (S2) a plurality of files from a first server (1), identifying (S3) a corrupted file, sending (S4) a request for the corrupted file to a repair server (2) through the at least second network, and indicating (S4) in the request the at least second network type (5) to which the at least second interface is connected and/or the quality level of the reception on the first interface.

The invention will be better understood and illustrated by means of the following embodiment and execution examples, in no way limitative, with reference to the appended figures on which:
- Figure 1 is a block diagram of a system compliant with the embodiment;
- Figure 2 is a flow chart according to the embodiment;
- Figure 3 is a flow chart according to the embodiment;
- Figure 4 is a block diagram of a terminal according to the embodiment; and
- Figure 5 is a block diagram of a server according to the embodiment.

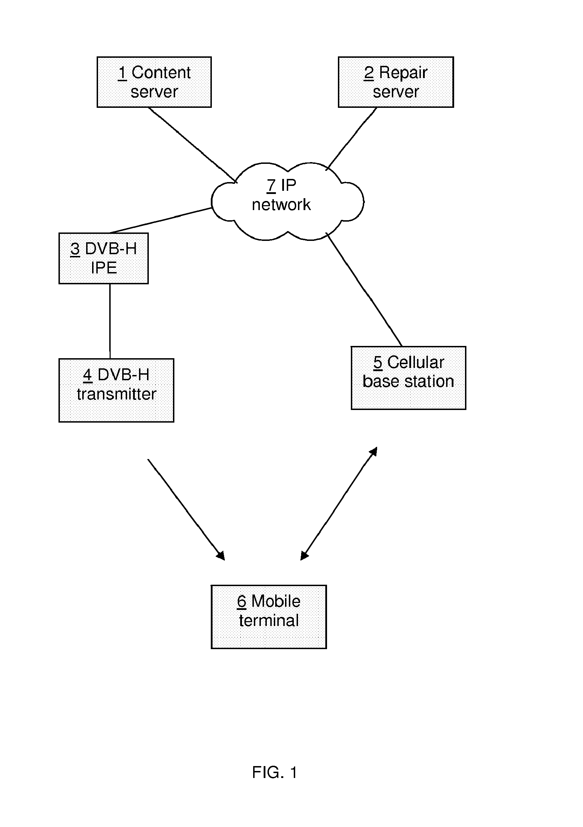

In Figures 1, 4 and 5, the represented blocks are purely functional entities, which do not necessarily correspond to physically separate entities. Namely, they could be developed in the form of software, or be implemented in one or several integrated circuits.

The exemplary embodiment comes within the framework of IP Datacast over DVB-H, and more particularly the one of file repair procedures, but the invention is not limited to this particular environment and may be applied within other frameworks where a device may have the opportunity to send content to another device through various means, and has to perform a selection among these means.

The system according to the embodiment is represented in figure 1. The figure 1 does not represent all the devices involved in the DVB-H content distribution, which are well known to the skilled in the art. But it indicates the devices relevant to the embodiment.

A content server 1 comprises means for sending content to a plurality of terminals such as the mobile terminal 6. According to the embodiment, the server 1 is a video-on-demand server, noted VoD server. Of course it could be a server providing any type of content. The content is multicast through a DVB-H network. The server sends multicast content on RTP over UDP/IP to the IP Encapsulator 3, noted DVB-H IPE. The IP Encapsulator then converts the UDP/IP content into a DVB-H MPEG transport stream and sends it to the DVB-H transmitter 4. The DVB-H transmitter 4 finally broadcasts the content to the mobile terminal 6, which is a DVB-H receiver.

The repair server 2 comprises means for recovering missing file data. It comprises an interface to an IP network 7. It comprises means for sending data to a terminal either through the DVB-H network of through the cellular network.

The system comprises at least a terminal 6. The terminal comprises means for receiving content from a DVB-H network, and means for connecting to a cellular base station. A terminal that has not correctly received a file fragment sends a request to the repair server through the point-to-point bidirectional connection. The terminal comprises an interface to a cellular network. It sends the TCP/IP request to the repair server through the cellular base station 5. At reception of the file repair request the repair server sends a file repair response message to the terminal. It may send the response in unicast through the cellular network, or in multicast through the DVB-H network.

In the system of the embodiment, the terminal is connected to the repair server through a cellular network. Of course the embodiment is not limited to this type of network and might be any other type of network that permits to connect to Internet. This comprises any bidirectional point-to-point mode, as a mobile network, such as WiFi, or also a broadband network, such as xDSL. The cellular network stands for all cellular technologies such as GSM, GPRS, Edge, UMTS...

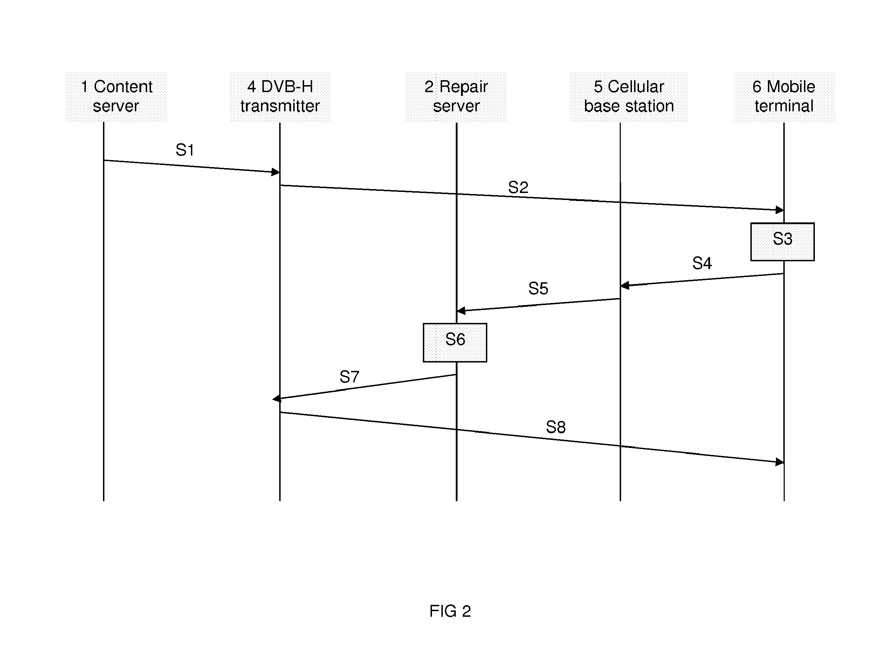

Figure 2 is a flow chart representing the content distribution and repair according to the embodiment. It comprises the following steps:
S1, S2. the content server 1 multicasts content to the terminal 6 through the DVB-H transmitter.
S3. the mobile terminal checks the corrupted or missing files in a method well known per se as defined in document (a).
S4, S5. the terminal sends a unicast file repair request to the repair server 2 through the cellular base station. The format of the repair request is defined hereafter. It comprises the type of cellular network used by the terminal to send the request to the repair server.
S6. the repair server determines the cost of the transmission taking into account the type of the cellular network.
S7, S8. the repair server has determined that the better path is the multicast, which corresponds to the first possibility. It sends the file to the terminal through the DVB-H network, i.e. the DVB-H IPE and the DVB-H transmitter.

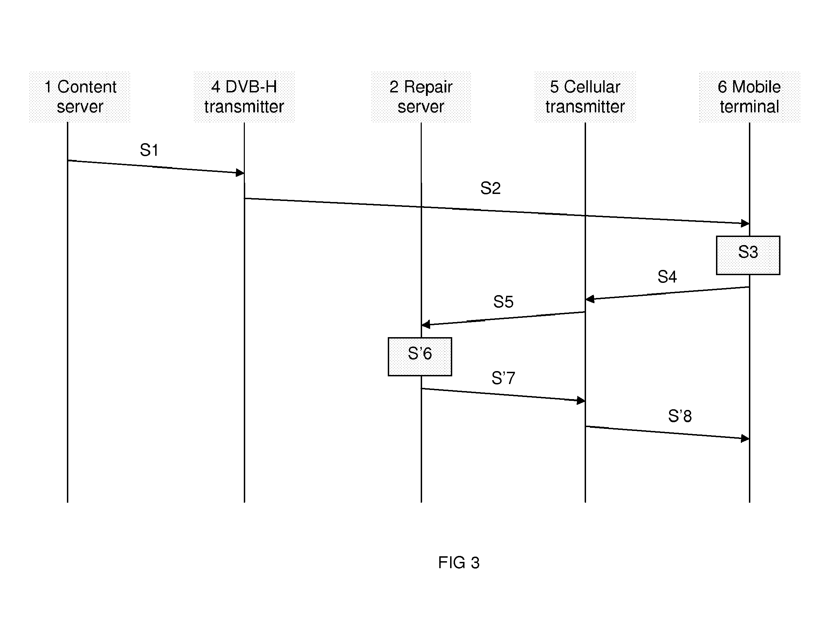

Figure 3 is a flow chart representing the content distribution and repair which corresponds to the second possibility where the repair server has determined that the better path is the unicast, S'6. The repair server sends the file through the cellular network, S'7, S'8.

The file repair request is defined in document (a). According to the FLUTE terminology, the terminal submits a request through HTTP. The request comprises the file URI which corresponds to the identifier of the file fragment.

According to the embodiment, the request also comprises information relative to the cellular network type used in the point-to-point connection.

The HTTP syntax is as follows, according to the Augmented Backus-Naur Form, noted ABNF grammar and defined in the RFC 4234:
query = file_URI *("&" sbn_info) / "&" NET_info
...
NET_info = "fileREPAIRNET=" NET
NET = 10*DIGIT
NET = (Wi-Fi over xDSL, Edge, GSM, HSCSD, GPRS)

The NET indicates the type of the cellular network. The NET might also indicate the maximum supported data rate, with the following examples indicated in the table:

| NET value | GSM | HSCSD | GPRS | Edge | Wi-Fi over xDSL |
|---|---|---|---|---|---|
| MaxDataRate | 9.600 | 50.000 | 115.000 | 384.000 | 8.000.000 |

GSM stands for Global System for Mobile Communications network, HSCSD stands for High-Speed Circuit-Switched Data, GPRS stands for General Packet Radio Services, Edge stands for Enhanced Data rates for GSM Evolution network, Wi-Fi stands for the wireless area networks based on IEEE802.11 specifications, and xDSL stands for all the related digital subscriber line technologies.

In a first variant embodiment, the terminal indicates to the repair server the quality of the DVB-H network at the terminal side. The repair by multicast is useless if the quality of the DVB-H network at the terminal coverage zone is not convenient.
The terminal comprises means for evaluating the quality of the reception, and in particular the bit error rate, noted BER, in a manner well known per se. The terminal then determines different thresholds depending on the value of the BER. The terminal indicates the threshold value to the repair server.
In the embodiment, there are three values, 0, 1 and 2, corresponding to the quality of the reception, respectively bad, good and excellent.
Two thresholds S1 and S2 are defined. S1 = 2.10⁻⁴, S2 = 10⁻⁵.
The DVB-H_Quality is then defined as follows:
DVB-H_Quality = 0 if BER > S1
DVB-H_Quality = 1 if S2 < BER < S1
DVB-H_Quality = 2 if S2 > BER
The HTTP syntax is as follows:
query = file_URI *("&" sbn_info) / "&" NET_info / "&" DVB-H_Quality
...
NET_info = "fileREPAIRNET=" NETLIST
NETLIST= #NET
NET= wi-fi or Edge
DVB-H_Quality = #QUALITY
QUALITY = 0 (bad) or 1 (good) or 2 (excellent)

Of course the terminal might also indicate the BER value to the repair server.

In a second variant embodiment, the terminal indicates the network type together with the quality of the DVB-H network.
The HTTP syntax is then as follows:
query = file_URI *("&" sbn_info) / "&" NET_info
...
NET_info = "fileREPAIRNET=" NETLIST
NETLIST= #NET
NET= Wi-Fi/(DVB-H, quality) or Edge /(DVB-H, quality)

Alternatively, HTTP 1.1 headers are used to report the network type to the server. In HTTP 1.1, request messages may transfer an entity that contains information about the network if not otherwise restricted by the request method or response status code. An entity consists of entity-header fields and an entity-body. An entity-header fields define meta-information about the entity-body or, if nobody is present, about the resource identified by the request. An example about an entity is the following:
entity-header = ...
|extension-header
Where extension-header = message-header = NET_LIST

An extension-header mechanism allows additional entity-header fields to be defined without changing the protocol. Normally, unrecognized header fields should be ignored by the recipient and must be forwarded by transparent proxies. So, in our application this field is to be recognizable by the repair server.
NET_LIST = "NETLIST " ":" 1#NET
NET= Wi-Fi/(DVB-H, quality) or Edge /(DVB-H, quality)

Alternatively a number can be used to encode the max throughput the network can provide. This throughput can then be used to compute the cost of the network.

According the received information in the request, the repair server calculates the cost associated to each network for sending the file requested by the request. It determines the best repairing method. The transmitted information is accurate and provides an accurate estimation of the cost. According to the embodiment, the computation of the cost is such as described in document (a) Annex B, where Cu is the cost for the transmission of a single octet over a point to point network, and Cm is the cost for the transmission of a single octet over a point to multipoint network.

In the embodiment, C'u is the cost for the transmission of a single octet over a point to point network, and C'm is the cost for the transmission of a single octet over a point to multipoint network.
C'm is obtained as follows:
If DVB-H_Quality = 0, C'm = f1 (Cm)
If DVB-H_Quality = 1, C'm = f2(Cm)
If DVB-H_Quality = 2, C'm = f3(Cm)

Where f1(Cm) = 20*Cm, f2(Cm) = 2*Cm, and f3(Cm) = Cm. Of course f1, f2 and f3 functions might take different values.

C'u is predefined according to the network type. Different values are predefined, C'u_GSM, C'u_Edge. And the correct value is taken into account on reception of the indication of the network type. Predefined C'u values depend on the maximum data rate on each network. In a variant embodiment, they could also depend on the downloading cost for the terminal.

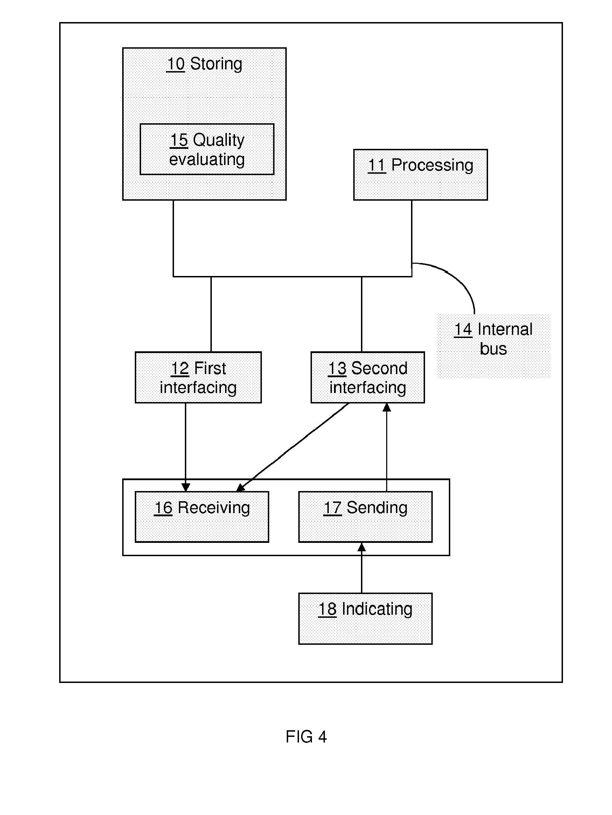

The mobile terminal 6 of the embodiment is a DVB-H receiver. The building blocks of such a device are well known per se. Only the relevant elements according to the embodiment are described in figure 4.

The mobile terminal comprises first interfacing means 12 which is, according to the embodiment, a DVB-H interface. This enables the device to connect to a DVB-H transmitter, and to receive DVB-H content from a content server. The connection is unidirectional; the terminal can only receive data through this interface.

The terminal comprises a second interfacing means 13, which is according to the embodiment a cellular interface that conforms to the Edge specification. The second interfacing means permits the terminal to connect to the Internet. The connection is bidirectional. The quality evaluating means 15 permits to evaluate the bit error rate at the DVB-H reception, in a manner well known per se. The storing means 10 is intended to store programs that run on the device, such as the quality evaluation means. The internal bus 14 is intended to connect the various modules of the device. The processing means 11 are intended to run the terminal.

The terminal comprises receiving means 16 for receiving content from the first and the second interfacing means. It also comprises sending means 17 for sending data through the second interfacing means. The indicating means 18 are intended to include into a request sent by the sending means the indication of the network type that permits the terminal to connect to the second network.

The terminal might comprise more than one second interfacing means. It might comprise a GSM interface, an Edge interface and a WiFi interface. It selects between these interfaces to connect to the Internet, depending on the available network and the cost of the connection. When the terminal sends a request to a server, it includes into the request the network type; GSM, Edge or WiFi.

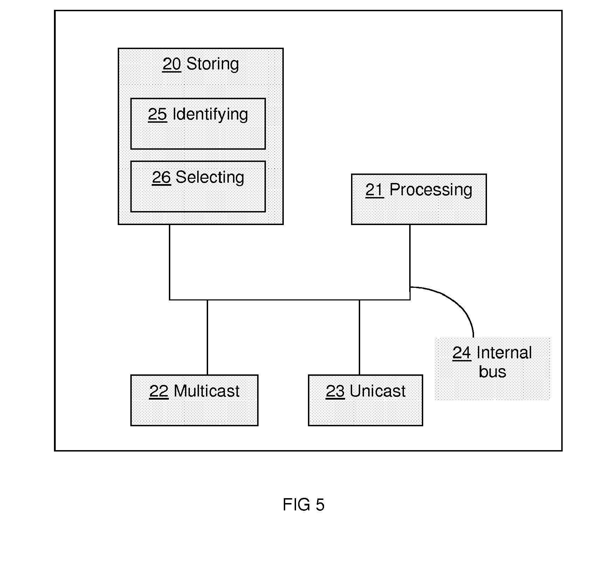

The repair server 2 of the embodiment is represented in figure 5. Only the relevant modules according to the embodiment are represented. The multicast means 22 are intended to send content through the DVB-H network, as indicated in figure 1. The unicast means 23 are intended to send are receive content through the cellular network, as indicated in figure 1. A terminal connects to the server through the unicast means. The repair server sends a corrupted file fragments through the unicast or multicast means.

The identifying means 25 identify the network type that permits the terminal to connect to the second network. When the terminal sends a request for a corrupted file fragment, it includes the network type into the request. The server identifies the network type. It indicates the network type to the selecting means 26. The selecting means are intended to select between the multicast and the unicast to send the file. All the files are stored into the storing means. The identifying means also identifies the quality level of the reception at the terminal, and transmits that level to the selecting means.

## Claims

1. A network terminal (6) comprising
- a first interface (12) to a first network adapted to receive content from a server (1, 2),
- at least a second interface (13) to at least a second network adapted to connect said terminal to said server (2),
- means (17) for sending a request through the at least second interface to said server for receiving a content from said server, said content being received either through the first or the at least second interface, and
- means (18) for indicating in said request the at least second network type (5) to which said at least second interface is connected and/or the quality level of the reception on said first interface.

2. A server (2) comprising
- multicast means (22) for sending content in broadcast to a terminal through a first network,
- unicast means (23) for sending content in unicast to said terminal through a second network, and for receiving a request from said terminal,
- means (25) for identifying a network type (5) that permits the terminal to connect to said second network and/or the quality level of the reception of said terminal on said first network, and
- means (26) for selecting among said interfaces to send a file to said terminal, said selection depending on the network type and/or the quality level.

3. Server according to the preceding claim, **characterized in that** said means for identifying identifies the network type and/or the quality level in a request received from the terminal for receiving said file.

4. Method for sending content from a server (2) to a terminal (6), said server comprising multicast means (22) for sending content in broadcast to a terminal through a first network, unicast means (23) for sending content in unicast to said terminal through a second network,
**characterized in that** it comprises at the server the steps of:
- identifying (S5) a network type (5) that permits the terminal to connect to said second network and/or the quality level of the reception of said terminal on said first network, and
- selecting (S6, S'6) among unicast and multicast means for sending data to said terminal, said selection depending on the network type and/or the quality level.

5. Method for requesting a corrupted file to a repair server (2), in a terminal comprising a first interface (12) to a first network adapted to receive content from a server (1, 2), and at least a second interface (13) to at least a second network adapted to connect said terminal to said server (2),
**characterized in that** it comprises at the terminal the steps of:
- receiving (S2) a plurality of files from a first server (1),
- identifying (S3) a corrupted file,
- sending (S4) a request for the corrupted file to a repair server (2) through the at least second network, and
- indicating (S4) in said request the at least second network type (5) to which said at least second interface is connected and/or the quality level of the reception on said first interface.
